# EUROPEAN PATENT SPECIFICATION

(11) **EP 3 495 399 B1**
(45) Date of publication and mention of the grant of the patent: **26.10.2022**
(21) Application number: 18210203.8
(22) Date of filing: 04.12.2018
(51) Int. Cl.: C08F 283/01, C08F 290/06, C09D 5/34, C08K 5/00, C08K 3/22, C09D 7/60

(54) **STYRENE-FREE AND COBALT-FREE POLYMERIC COMPOSITION AND ITS USE FOR FILLING AND BONDING**
STYROL- UND KOBALTFREIE POLYMERZUSAMMENSETZUNG UND DEREN VERWENDUNG ZUM FÜLLEN UND VERBINDEN
COMPOSITION DE POLYMÈRE EXEMPTE DE STYRÈNE ET DE COBALT ET SON UTILISATION POUR LE REMPLISSAGE ET LA LIAISON

(30) Priority: 05.12.2017 IT 201700139888
(43) Date of publication of application: 12.06.2019
(73) Proprietor: PPG Industries Ohio, Inc., Cleveland, OH 44111 (US)
(72) Inventor: DISILVESTRI, Fabio, 42123 Reggio Emilia (IT); MOLENDI, Paolo, 42123 Reggio Emilia (IT); MARINI, Michele, 41026 Pavullo nel Frignano (IT); BONACINI, Corrado, 41126 Modena (IT); RIVALTA, Eleonora, 42122 Reggio Emilia (IT)
(74) Representative: Modiano, Micaela Nadia

(56) References cited:
- WO-A1-03/099257
- US-A1- 2007 010 609
- US-B1- 9 469 768

## Description

The present invention relates to a polymeric composition, particularly for filling and bonding.

More particularly, the present invention relates to a polymeric composition that is free from styrene and from compounds containing cobalt, comprising an unsaturated polyester resin or a urethane acrylate-based resin and to its use in car repairs, bonding and repairing of marble and granite, modeling, manufacture of molds and models, and structural bondings of composite material.

It is known in the field of filling and bonding to use polyester resins, particularly unsaturated polyester resins. Polyester resins constitute a highly differentiated and complex family of synthetic resins obtained with a large variety of initial raw materials. These resins are more or less viscous liquids with a straw yellow color which cure with the addition of catalysts. Their toughness, flexibility and rigidity can be modified by adding additives and/or reinforcements which are generally glass and carbon fibers. They are used in the building sector to provide ducts, partitions, doors or windows, glazings and decorative panels, but also in the nautical sector, in which it is calculated that over 90% of pleasure craft hulls are manufactured with reinforced polyester resins and in which furthermore even warships such as minesweepers and boats for coastguard service are currently manufactured by using polyester resins. In the haulage industry, parts of cars, buses, trucks, farm machines, caravans, railcars are manufactured with reinforced polyester resins. There are many other applications which range from buttons to sleighs, to electrical insulators and wind turbine components.

Unsaturated polyester resins are usually used in the form of solutions of a solid unsaturated polyester placed inside a solvent monomer (diluent), which is also unsaturated. From the beginning of the marketing of unsaturated polyester resins, styrene has been used as a diluent by virtue of its low cost, wide availability, ease of use, excellent mechanical properties and optimum polymerization kinetics. However, in recent years several law systems have imposed limitations to styrene emissions, due to the noxious effects for the environment and health, and for the same reason occupational exposure to styrene is strictly regulated.

Various alternatives to styrene have therefore been explored in order to reduce its harmful emissions and limit the exposure of workers to this substance. For example, styrene derivatives with a higher molecular weight have been used as reactive diluents, achieving a reduction in emissions. However, these styrene analogs are volatile compounds and emissions are still significant. It has also been demonstrated that the addition of paraffins to unsaturated polyester resins reduces emissions by virtue of the forming of a thin film on the surface of the resin. However, this solution is suitable only for some applications, whereas in others it is unacceptable, since it causes a decrease in interlaminar adhesion. In most cases, monomers of the acrylate and methacrylate type with low volatility have turned out to be unsuitable to replace styrene in unsaturated polyester resins, since atmospheric oxygen inhibits polymerization, leading to a surface that is not completely hardened and has a "tacky" appearance, the mechanical properties of which are inferior to those of resins prepared with styrene.

Patent US 7,396,882 describes styrene-free unsaturated polyester resin compositions obtained by copolymerization of a dicyclopentadiene (DCPD)-based unsaturated polyester resin with a urethane (meth)acrylate and two different acrylic monomers, respectively a multifunctional acrylate or methacrylate monomer and a hydroxyl-functionalized acrylate or methacrylate monomer which acts as a reactive diluent. Polymerization is achieved in the presence of catalysts, particularly compounds containing cobalt, a metal whose possible toxic effects are known.

Although formulations such as the one described in US 7,396,882 constitute an improvement with respect to traditional formulations that contain styrene, the need still remains to develop improved styrene-free compositions, which allow to further reduce the emissions of substances that have been classified as, or are in any case believed to be, toxic for health and for the environment, while ensuring that the finished product has the characteristics that can be obtained by using styrene as primary reactive diluent.

The aim of the present invention is therefore to provide a styrene-free polymeric composition that has polymerization kinetics that are similar to those of formulations containing styrene, extremely low sensitivity to inhibition by atmospheric oxygen, absence of surface tackiness on the product to which it is applied, and has sanding times similar to those of formulations containing styrene.

Another object of the present invention is to provide a composition that allows to reduce the emissions of styrene into the environment.

Another object of the present invention is to provide a polymeric composition that allows to produce articles with reduced linear shrinkage.

Not least object of the present invention is to provide a composition that allows polymerization without requiring the use of cobalt-based catalysts.

This aim, as well as these and other objects which will become better apparent hereinafter, are achieved by a styrene-free and cobalt-free polymeric composition characterized in that it comprises:
- a resin selected from the group consisting of an unsaturated polyester resin, a urethane acrylate-based resin, and combinations thereof;
- an acrylate or methacrylate monomer selected from the group consisting of methyl(meth)acrylate, ethyl(meth)acrylate, butyl(meth)acrylate, isobutyl(meth)acrylate, hydroxyethyl(meth)acrylate, propyl(meth)acrylate, hydroxypropyl(meth)acrylate, benzyl(meth)acrylate, tripropylene glycol di(meth)acrylate, 1,6-hexanediol(meth)acrylate, dipropylene glycol di(meth)acrylate, pentaerythritol tetracrylate (PPTTA), trimethylol propane ethoxy triacrylate (TMPEOTA), glyceryl triacrylate propoxylate (GPTA), isobornyl(meth)acrylate, phenoxyethyl(meth)acrylate, hexyl(meth)acrylate, cyclohexyl(meth)acrylate, 2-butoxyethyl(meth)acrylate, ethyl hexyl (meth)acrylate, isodecyl(meth)acrylate, 1,3-butanediol di(meth)acrylate;

- an amine type polymerization accelerator; and
- talc.

The aim and objects of the present invention are also achieved by the use of a composition according to the invention for car repairing, bonding and repairing of marble, granite, ceramics, natural and synthetic stones, modeling, manufacture of molds and models, and structural bondings of composite material.

Further characteristics and advantages of the invention will become better apparent from the detailed description that follows.

The present invention relates to an adhesive polymeric composition that is free from cobalt-based compounds, particularly for filling and bonding, based on an unsaturated polyester resin and/or on a urethane acrylate-based resin and which, as a replacement of styrene, uses an acrylate or methacrylate monomer as solvent monomer.

According to the present invention, the styrene-free and cobalt-free polymeric composition comprises, preferably is constituted essentially by, more preferably is constituted by the following components as defined above: a resin, an acrylate or methacrylate monomer, a polymerization accelerator, talc and optionally one or more additives.

In the polymeric composition according to the present invention, a first component consists of a resin selected from the group consisting of an unsaturated polyester resin, a urethane acrylate-based resin, and combinations thereof.

Preferably, the resin of the polymeric composition according to the invention is an unsaturated polyester resin selected from the group consisting of a DCPD (dicyclopentadiene)-based unsaturated polyester resin, a tetrahydrophthalic unsaturated polyester resin, an orthophthalic unsaturated polyester resin, and an unsaturated vinyl ester resin.

More preferably, the resin is a DCPD-based unsaturated polyester resin.

In a preferred embodiment, the polymeric composition according to the invention comprises 10 to 80%, more preferably 18 to 25% by weight of the resin based on the total weight of the composition.

A second component of the polymeric composition according to the present invention is constituted by an acrylate or methacrylate monomer. Within the scope of the present invention, the term "(meth)acrylate" is to be understood as a reference both to the acrylic monomer and to the corresponding methacrylic monomer.

In particular, in the polymeric composition according to the present invention the acrylate or methacrylate monomer is selected from the group consisting of methyl(meth)acrylate, ethyl(meth)acrylate, butyl(meth)acrylate, isobutyl(meth)acrylate, hydroxyethyl(meth)acrylate, propyl(meth)acrylate, hydroxypropyl(meth)acrylate, benzyl(meth)acrylate, tripropylene glycol di(meth)acrylate, 1,6-hexanediol(meth)acrylate, dipropylene glycol di(meth)acrylate, pentaerythritol tetracrylate (PPTTA), trimethylol propane ethoxy triacrylate (TMPEOTA), glyceryl triacrylate propoxylate (GPTA), isobornyl(meth)acrylate, phenoxyethyl(meth)acrylate, hexyl(meth)acrylate, cyclohexyl(meth)acrylate, 2-butoxyethyl(meth)acrylate, ethyl hexyl (meth)acrylate, isodecyl(meth)acrylate, 1,3-butanediol di(meth)acrylate.

In a more preferred embodiment of the polymeric composition according to the invention, the acrylate or methacrylate monomer is selected from the group consisting of isobutylacrylate, butylacrylate, and a combination thereof.

Preferably, the polymeric composition according to the invention comprises the acrylate or methacrylate monomer in a quantity from 5 to 20%, more preferably 7 to 10% by weight based on the total weight of the composition.

The inventors of the present invention have in fact discovered that the use of the acrylate or methacrylate monomers cited above, in particular an acrylate monomer selected from the group consisting of isobutylacrylate, butylacrylate, and a combination thereof, entails technical advantages, such as a high solvent power for the resins based on unsaturated polyester and/or urethane acrylate, polymerization kinetics that can be compared with those of styrene, and an extremely low sensitivity to the inhibition caused by the oxygen of the atmosphere.

Further advantages of the present invention, applied both in high and low thicknesses, are the absence of surface tackiness, the excellent hardening and the optimum adhesion to steel, galvanized sheet metal, aluminum, wood, ceramics, marble, granite and natural and synthetic stones with sanding times similar to those of formulations that contain styrene. Furthermore, by virtue of the high reactivity of the acrylate or methacrylate monomer that is present in the polymeric composition according to the present invention, the emissions of said monomer into the environment are reduced. Not least advantage is the reduction of linear shrinkage and the limited exothermic reaction peak.

The polymeric composition according to the invention furthermore comprises a compound of the amine type acting as a polymerization accelerator (accelerant).

In a preferred embodiment, said polymerization accelerator of the amine type is selected from the group consisting of p-toluidine, m-toluidine, and derivatives thereof. Among the derivatives of p-toluidine and m-toluidine acting as accelerant it is possible to mention for example the N-monoalkyl- and N,N-dialkyl-substituted derivatives, such as for example N,N-dimethyl-p-toluidine, N,N-diisopropanol-p-toluidine, N-(2-hydroxyethyl)-N-methyl-p-toluidine, N,N-bis(2-hydroxyethyl)-p-toluidine, N-ethyl-m-toluidine and N,N-dimethyl-m-toluidine.

Preferably, in the polymeric composition according to the present invention the polymerization accelerator is selected from N,N-bis(2-hydroxyethyl)-p-toluidine, p-toluidine and m-toluidine, more preferably the polymerization accelerator is N,N-bis(2-hydroxyethyl)-p-toluidine.

In a preferred embodiment, the polymeric composition according to the invention comprises 0.1 to 1.5%, preferably 0.1 to 0.5% by weight of the polymerization accelerator of the amine type based on the total weight of the composition.

The composition according to the present invention also comprises talc as mineral filler, preferably in a quantity from 3 to 50%, more preferably 30 to 40%, even more preferably 35% by weight based on the total weight of the composition. The presence of the talc facilitates sanding operations when the composition is used for the filling and bonding of articles and contributes to improve the appearance of the surface of sanded articles.

The composition according to the invention may furthermore comprise one or more additives, preferably in a total quantity that is sufficient to reach 100% (q.s. 100%) by weight based on the total weight of the composition, wherein said one or more additives are selected from the group consisting of:
(a) an antioxidant;
(b) a surface additive;
(c) a mineral filler consisting of one or more of barium sulfate, calcium carbonate or kaolin;
(d) a rheology modifier; and
(e) a pigment selected from the group consisting of titanium dioxide (TiO₂), iron oxides; and combinations thereof.

The polymeric composition according to the invention can comprise an antioxidant in a quantity of 0.001-0.02% by weight, more preferably 0.008-0.02% by weight based on the total weight of the composition.

Preferably, in the polymeric composition according to the invention the antioxidant is selected from the group consisting of 1,4-naphthoquinone, toluene hydroquinone, tetrahydroquinone, parabenzoquinone and a combination thereof. More preferably, the antioxidant is constituted by a combination of 1,4-naphthoquinone, parabenzoquinone and toluene hydroquinone, even more preferably a combination in which the 1,4-naphthoquinone is in a quantity of 0.001-0.01% by weight based on the total weight of the composition, the toluene hydroquinone is in a quantity of 0.003-0.008% by weight based on the total weight of the composition, and the parabenzoquinone is in a quantity of 0.004-0.007% by weight based on the total weight of the composition.

A surface additive can be added to the polymeric composition according to the invention in order to reduce the inhibition of polymerization by oxygen by creating a protective film on the surface of the product to which the composition according to the invention is applied.

In a preferred embodiment, the polymeric composition according to the invention comprises the surface additive in a quantity of 0.01-1%, more preferably 0.1-0.6%, even more preferably 0.4% by weight based on the total weight of the composition.

Preferably, the surface additive is a wax, such as for example paraffin with a melting point (MP) of 40-65°C.

In addition to the talc, the polymeric composition according to the present invention can comprise one or more other mineral fillers selected from the group consisting of barium sulfate, calcium carbonate and kaolin.

Preferably, the polymeric composition according to the invention comprises one or more of:
- barium sulfate in a quantity up to 25%, preferably 14-16%, even more preferably 15% by weight;
- calcium carbonate in a quantity up to 40%, preferably 10-16%, even more preferably 12.5% by weight; and
- kaolin in a quantity up to 10%, preferably 3-6%, even more preferably 4% by weight;
each based on the total weight of the composition.

The polymeric composition according to the invention may furthermore comprise a rheology modifier, preferably in a quantity up to 6%, more preferably 0.3-1.5%, even more preferably 0.7% by weight based on the total weight of the composition.

Preferably, the rheology modifier is a derivative of castor oil, for example a hydrogenated castor oil (preferably in a quantity equal to 0.8% by weight), a silica gel with a surface area of 200 m²/g (preferably in a quantity equal to 0.5% by weight), or a combination of a derivative of castor oil in a quantity of 0.4% by weight with the silica gel in a quantity of 0.8% by weight.

Furthermore, the polymeric composition according to the invention can comprise a pigment selected from the group consisting of titanium dioxide (TiO₂), one or more iron oxides (red, yellow and black), and a combination thereof.

In a preferred embodiment, the polymeric composition according to the invention comprises the pigment in a quantity up to 38% by weight based on the total weight of the composition.

Preferably, the titanium dioxide is present in a quantity up to 30% by weight based on the total weight of the composition, more preferably 3 to 6%, even more preferably 5%.

Preferably, the iron oxide (yellow and/or red and/or black) is present in a quantity up to 8% by weight based on the total weight of the composition, more preferably 0.2 to 8%, even more preferably 0.2 to 0.3%.

Preferably, the pigment comprises iron oxide yellow, red and/or black, but it is understood that other pigments commonly used with unsaturated polyester resins can be used in the composition of the present invention as an alternative to iron oxide yellow, red and/or black.

Of course, in addition to the components and additives cited above, the polymeric composition of the present invention can comprise furthermore also other additives conventionally used in the provision of unsaturated polyester resins, such as for example thixotropic agents, UV absorbers, plasticizers, flame retardants, water-repellents, and reinforcement agents (as reinforcement agents it is possible to use fibers of glass, carbon, cellulose, aramid, glass or plastic microspheres added in order to reduce the relative density). The polymeric composition of the present invention can furthermore comprise also glycols with various molecular weights in order to modify viscosity, anti-corrosion agents and adhesion promoters of the silane type.

The radical polymerization of the composition of the present invention begins with the mixing of the formulation with a catalyst, preferably 50% benzoyl peroxide in paste form, in a quantity of preferably 1-3% by weight with respect to the formulation, and in any case a cobalt-free catalyst. Polymerization is triggered at room temperature.

In a preferred embodiment, the polymeric composition according to the invention comprises, more preferably is essentially constituted by, even more preferably is constituted by:
- 10-80% by weight, preferably 18-25% by weight, of the dry resin;
- 5-20% by weight, preferably 7-10% by weight, of the acrylate or methacrylate monomer;
- 0.1-1.5% by weight, preferably 0.1-0.5% by weight, of the amine type polymerization accelerator;
- 3-50% by weight of talc; and
- one or more of additives (a), (b), (c), (d) or (e) q.s. to reach 100% by weight,
based on the total weight of the composition.

In a more preferred embodiment, the polymeric composition according to the invention comprises, more preferably is constituted essentially by, even more preferably is constituted by:
- 10-80% of a resin selected from the group consisting of a DCPD-based unsaturated polyester resin, a tetrahydrophthalic unsaturated polyester resin, an orthophthalic unsaturated polyester resin, an unsaturated vinyl ester resin, and a urethane acrylate-based resin;
- 5-20% by weight of an acrylate or methacrylate monomer selected from the group consisting of methyl(meth)acrylate, ethyl(meth)acrylate, butyl(meth)acrylate, isobutyl(meth)acrylate, hydroxyethyl(meth)acrylate, propyl(meth)acrylate, hydroxypropyl(meth)acrylate, benzyl(meth)acrylate, tripropylene glycol di(meth)acrylate, 1,6-hexanediol(meth)acrylate, dipropylene glycol di(meth)acrylate, pentaerythritol tetracrylate (PPTTA), trimethylol propane ethoxy triacrylate (TMPEOTA), glyceryl triacrylate propoxylate (GPTA), isobornyl(meth)acrylate, phenoxyethyl(meth)acrylate, hexyl(meth)acrylate, cyclohexyl(meth)acrylate, 2-butoxyethyl(meth)acrylate, ethyl hexyl (meth)acrylate, isodecyl(meth)acrylate, 1,3-butanediol di(meth)acrylate;
- 0.1-0.8% by weight of N,N-bis(2-hydroxyethyl)-p-toluidine;
- optionally up to 30% by weight of TiO₂;
- 0.2-8% by weight of iron oxide yellow, red and/or black;
- 3-50% by weight of talc;
- 0.001-0.01% by weight of 1,4-naphthoquinone;
- 0.003-0.008% by weight of toluene hydroquinone;
- 0.004-0.007% by weight of parabenzoquinone;
- 0.01 to 1% by weight of a wax;
- optionally up to 25% by weight of barium sulfate;
- optionally up to 40% by weight of calcium carbonate;
- optionally up to 10% by weight of kaolin; and
- optionally up to 6% by weight of a castor oil derivative,
based on the total weight of the composition.

In an even more preferred embodiment, the polymeric composition according to the invention comprises, more preferably is essentially constituted by, even more preferably is constituted by:
- 10% to 80% by weight of a DCPD-based unsaturated polyester resin;
- 6-15% by weight of an acrylate monomer selected from the group consisting of isobutylacrylate, butylacrylate, and a combination thereof;
- 0.1-0.8% by weight of N,N-bis(2-hydroxyethyl)-p-toluidine;
- optionally up to 30% by weight of TiO₂;
- 0.2-8% by weight of iron oxide yellow;
- 3-50% by weight of talc;
- 0.001-0.01% by weight of 1,4-naphthoquinone;
- 0.003-0.008% by weight of toluene hydroquinone;
- 0.004-0.007% by weight of parabenzoquinone;
- 0.01-1% by weight of a wax;
- optionally up to 25% by weight of barium sulfate;
- optionally up to 40% by weight of calcium carbonate;
- optionally up to 10% by weight of kaolin; and
- optionally up to 6% by weight of a castor oil derivative,
based on the total weight of the composition.

In another aspect, the present invention relates to the use of the polymeric composition according to any one of the embodiments cited above for filling and bonding, in particular for car repairing, bonding and repairing marble and granite, modeling, manufacture of molds and models, and structural bondings of composite material.

Within the scope of this aim, the present invention also relates to a method for the filling and bonding of an article by application to said article of a polymeric composition according to any one of the embodiments described herein. For example, said article can be a part of a body of a car, an article made of marble, granite, ceramics, natural and synthetic stones, a component of a model, an element made of composite material or a part of a boat.

The invention will now be described with reference to the following nonlimiting examples.

### Example 1 - Preparation of formulation 1

A quantity of 100 g of a polymeric composition according to the invention is prepared by dissolving 22.4 g of a DCPD-based unsaturated polyester resin in 9.6 g of isobutylacrylate, then 0.3 g of N,N-bis(2-hydroxyethyl)-p-toluidine are added. Mixing is performed up to homogenization, then 0.18 grams of a 5% solution of 1,4-naphthoquinone are added. Mixing continues until homogenization is achieved, then 0.3 g of a castor oil derivative, 5 g of titanium oxide (TiO₂), 0.2 g of iron oxide yellow (Fe₂O₃) and 12.3 g of barium sulfate are added. The mixture is mixed by means of a mixer of the Cowles type at high speed. One proceeds by adding 13 g of calcium carbonate and 30 g of talc. Mixing is performed again by means of a mixer of the Cowles type at high speed and finally 0.7 g of a 40% solution of paraffin in benzyl methacrylate and 3 g of isobutylacrylate are added. Mixing is performed until a uniform mixture is obtained.

### Example 2 - Preparation of formulation 2

A quantity of 100 g of a polymeric composition according to the invention is prepared by dissolving 8.4 g of a tetrahydrophthalic unsaturated polyester resin in 19.6 g of butylacrylate; 0.012 g of tetrahydroquinone (THQ) in 0.22 g of methyl ethyl ketone (MEK) are added and mixing is performed until homogenization is achieved. Then 0.4 g of N,N-bis(2-hydroxyethyl)-p-toluidine are added. Mixing is performed until homogenization is achieved, then 0.5 g of a castor oil derivative, 4 g of titanium oxide (TiO₂), 0.3 g of iron oxide yellow (Fe₂O₃) and 15 g of barium sulfate are added. The mixture is mixed by means of a mixer of the Cowles type at high speed. One proceeds by adding 12.5 g of calcium carbonate and 35 g of talc. Mixing is performed again by means of a mixer of the Cowles type at high speed and finally 1 g of a 40% paraffin solution in benzyl methacrylate and 3 g of isobutylacrylate are added. Mixing is performed until a uniform mixture is obtained.

This provides a filler characterized by a tack-free time of 14 minutes at 23°C. Furthermore, excellent adhesion on sanded and degreased steel and on galvanized sheet metal has also been observed.

### Example 3 - Procedure for filling or bonding with formulation 1

The adhesion of the filler to various media (galvanized sheet metal, aluminum and steel) was assessed as follows:
a) media preparation
   The first two media are prepared by degreasing with acetone respectively a galvanized metal sheet and an aluminum sheet (both measuring 20 cm × 6 cm). A third medium is prepared with a steel plate (20 cm × 6 cm), which is degreased, sanded with abrasive paper with P80 grit size, and again degreased with acetone.
b) filler preparation
   20 g of the composition of Example 1 receive the addition of 0.4 g of 50% benzoyl peroxide in paste form; the composition and the catalyst are mixed for one minute until a uniform mixture is obtained. The operation is performed while keeping the temperature at 23°C and the relative ambient humidity at 85%.
c) bonding
   The preparation obtained in b) is applied to each one of the three media cited above by means of a spatula, providing a thickness that increases from 0 microns to 500 microns. After 25 minutes at 23°C surface tackiness is assessed by pressing with one finger on the surface of the filler on a thin layer but also on a high-thickness layer.

The sanding time is then assessed by means of a method which provides for sanding with abrasive paper, with P100 grit size, both on a thin layer and on a high-thickness layer, subsequently checking that there is no articulation of clogged material or a glossy film is not present on the sandpaper. Adhesion and deep hardening are checked by means of an adapted blade.

### Example 4 - comparative assessment

The invention (filler) and a styrene-based reference product were compared by assessing in a comparative manner the following parameters: gel time, polymerization kinetics, heat distortion temperature (HDT), exothermic peak and linear shrinkage.
- Gel time was measured with the following method:
   in an adiabatic container at 25°C, 100 g of filler and 2 g of 50% benzoyl peroxide in paste form are mixed. The measured gel time is 130 s, while the gel time of the analogous product with styrene is 223 s. DSC (differential scanning calorimetry) (ISO 11357) was used to observe the advancement of polymerization, which for the invention passes from 93%, after 30 minutes, to 98% after one hour; the analogous filler with styrene after 30 minutes is at 84% and after one hour is at 94%. The Tg (glass transition temperature) of the invention is 57°C.
- The HDT (heat distortion temperature) of the invention, measured by DMA (dynamic mechanical analysis) according to ASTM D648, is 55°C, while for the analogous product with styrene it is 60°C.
- The exothermic peak is 95.7%°C, with a peak time of 5m 25s, while the analogous styrene-containing product has an exothermic peak at 98.9°C, with a time to peak of 10 m 10 s.
- Linear shrinkage was measured by means of a method that consists in using a semi-cylindrical internally hollow mold which measures 20 cm in length and 2 cm in diameter. The inside of the mold is waxed, in order to avoid the adhesion of the filler to the mold. The mold is then filled with the catalyzed filler. After 24 hours at ambient temperature and two hours of conditioning at 80°C, the article is removed from the mold and is measured. Linear shrinkage is measured as a percentage difference between the final length of the article and the internal length of the mold. The linear shrinkage of the invention, catalyzed at 2% with 50% benzoyl peroxide in paste form, after 24 hours of conditioning at ambient temperature and 2 hours at 80°C, is 0.55%, which is lower than that of the analogous product containing styrene, which is 0.70%.

In practice it has been found that the polymeric composition according to the present invention improves the background art, replacing styrene with a low-danger acrylic monomer. This composition allows to perform the polymerization process in the absence of catalysts such as cobalt and to obtain products that are free from defects (such as for example linear shrinkage and surface tackiness), in a process with reduced harmful emissions into the environment. The characteristics of the polymeric composition according to the invention allow its use in numerous applications within the field of filling and bonding.

## Claims

1. A styrene-free and cobalt-free polymeric composition **characterized in that** it comprises:
- a resin selected from the group consisting of an unsaturated polyester resin, a urethane acrylate-based resin, and combinations thereof;
- an acrylate or methacrylate monomer selected from the group consisting of methyl(meth)acrylate, ethyl(meth)acrylate, butyl(meth)acrylate, isobutyl(meth)acrylate, hydroxyethyl(meth)acrylate, propyl(meth)acrylate, hydroxypropyl(meth)acrylate, benzyl(meth)acrylate, tripropylene glycol di(meth)acrylate, 1,6-hexanediol(meth)acrylate, dipropylene glycol di(meth)acrylate, pentaerythritol tetracrylate (PPTTA), trimethylol propane ethoxy triacrylate (TMPEOTA), glyceryl triacrylate propoxylate (GPTA), isobornyl(meth)acrylate, phenoxyethyl(meth)acrylate, hexyl(meth)acrylate, cyclohexyl(meth)acrylate, 2-butoxyethyl(meth)acrylate, ethyl hexyl (meth)acrylate, isodecyl(meth)acrylate, 1,3-butanediol di(meth)acrylate;
- an amine type polymerization accelerator; and
- talc.

2. The polymeric composition according to claim 1, **characterized in that** it comprises furthermore one or more additives selected from the group consisting of:
(a) an antioxidant;
(b) a surface additive;
(c) a mineral filler consisting of one or more of barium sulfate, calcium carbonate or kaolin;
(d) a rheology modifier;
(e) a pigment selected from the group consisting of titanium dioxide (TiO₂), iron oxides; and
combinations thereof.

3. The polymeric composition according to claim 2, **characterized in that** it comprises, based on the total weight of the composition:
- 10 to 80% by weight, preferably 18 to 25% by weight, of the dry resin;
- 5 to 20% by weight, preferably 7 to 10% by weight, of the acrylate or methacrylate monomer;
- 0.1 to 1.5% by weight, preferably 0.1 to 0.5% by weight, of the amine type polymerization accelerator;
- 3 to 50% by weight of talc; and
- the one or more additives q.s. to 100% by weight.

4. The polymeric composition according to any one of claims 1 to 3, **characterized in that** said resin is an unsaturated polyester resin selected from the group consisting of a DCPD (dicyclopentadiene)-based unsaturated polyester resin, a tetrahydrophthalic unsaturated polyester resin, an orthophthalic unsaturated polyester resin, and an unsaturated vinyl ester resin, preferably a DCPD-based unsaturated polyester resin.

5. The polymeric composition according to any one of the preceding claims, **characterized in that** said acrylate or methacrylate monomer is an acrylate monomer selected from the group consisting of isobutylacrylate, butylacrylate, and a combination thereof.

6. The polymeric composition according to any one of claims 2 to 5, **characterized in that** said amine type polymerization accelerator is selected from the group consisting of p-toluidine, m-toluidine, and derivatives thereof.

7. The polymeric composition according to any one of claims 2 to 6, **characterized in that** it comprises 0.01-1% by weight of the surface additive based on the total weight of the composition.

8. The polymeric composition according to any one of claims 2 to 7, **characterized in that** said surface additive is a wax.

9. The polymeric composition according to any one of claims 2 to 8, **characterized in that** it comprises 0.008-0.020% by weight of the antioxidant based on the total weight of the composition.

10. The polymeric composition according to any one of claims 2 to 9, **characterized in that** said antioxidant is selected from the group consisting of 1,4-naphthoquinone, toluene hydroquinone, tetrahydroquinone, parabenzoquinone and a combination thereof, preferably a combination of 1,4-naphthoquinone, toluene hydroquinone, and parabenzoquinone.

11. The polymeric composition according to any one of claims 2 to 10, **characterized in that** it comprises up to 6% by weight of the rheology modifier based on the total weight of the composition.

12. The polymeric composition according to any one of claims 2 to 11, **characterized in that** said rheology modifier is selected from the group consisting of a castor oil derivative, a silica gel with a surface area of 200 m²/g, and a combination thereof.

13. The polymeric composition according to any one of claims 2 to 12, **characterized in that** it comprises, based on the total weight of the composition, one or more of barium sulfate up to 25% by weight, calcium carbonate up to 40% by weight, and kaolin up to 10% by weight.

14. The polymeric composition according to claim 2, **characterized in that** it comprises, based on the total weight of the composition:
- 10% to 80% by weight of a DCPD-based unsaturated polyester resin;
- 5 to 20% by weight of an acrylate monomer selected from the group consisting of isobutylacrylate, butylacrylate, and a combination thereof;
- 0.1 to 0.8% by weight of N,N-bis(2-hydroxyethyl)-p-toluidine;
- optionally up to 30% by weight of TiO₂;
- 0.2 to 8% by weight of iron oxide yellow;
- 3 to 50% by weight of talc;
- 0.001 to 0.01% by weight of 1,4-naphthoquinone;
- 0.003 to 0.008% by weight of toluene hydroquinone;
- 0.004 to 0.007% by weight of parabenzoquinone;
- 0.01 to 1% by weight of a wax;
- optionally up to 25% by weight of barium sulfate;
- optionally up to 40% by weight of calcium carbonate;
- optionally up to 10% by weight of kaolin; and
- optionally up to 6% by weight of a castor oil derivative.

15. Use of a composition according to any one of claims 1 to 14 for car repairing; bonding and repairing marble, granite, ceramics, natural and synthetic stones; modeling; manufacture of molds and models; and structural bondings of composite material.

## Patentansprüche

1. Eine styrolfreie und kobaltfreie Polymerzusammensetzung, **dadurch gekennzeichnet, dass** sie Folgendes umfasst:
- ein Harz, gewählt aus der Gruppe bestehend aus einem ungesättigten Polyesterharz, einem Harz auf Urethanacrylatbasis und Kombinationen davon;
- ein Acrylat- oder Methacrylatmonomer, gewählt aus der Gruppe bestehend aus Methyl(meth)acrylat, Ethyl(meth)acrylat, Butyl(meth)acrylat, Isobutyl(meth)acrylat, Hydroxyethyl(meth)acrylat, Propyl(meth)acrylat, Hydroxypropyl(meth)acrylat, Benzyl(meth)acrylat, Tripropylenglycoldi(meth)acrylat, 1,6-Hexandiol(meth)acrylat, Dipropylenglycoldi(meth)acrylat, Pentaerythritoltetracrylat (PPTTA), Trimethylolpropanethoxytriacrylat (TMPEOTA), Glyceryltriacrylatpropoxylat (GPTA), Isobornyl(meth)acrylat, Phenoxyethyl(meth)acrylat, Hexyl(meth)acrylat, Cyclohexyl(meth)acrylat, 2-Butoxyethyl(meth)acrylat, Ethylhexyl(meth)acrylat, Isodecyl(meth)acrylat, 1,3-Butandioldi(meth)acrylat;
- einen Polymerisationsbeschleuniger vom Amintyp und
- Talk.

2. Die Polymerzusammensetzung gemäß Anspruch 1, **dadurch gekennzeichnet, dass** sie weiter einen oder mehrere Zusatzstoffe umfasst, gewählt aus der Gruppe bestehend aus:
(a) einem Antioxidans,
(b) einem Oberflächenadditiv,
(c) einem mineralischen Füllstoff, bestehend aus einem oder mehreren von Bariumsulfat, Kalziumcarbonat oder Kaolin,
(d) einem Rheologie-Modifizierer,
(e) einem Pigment, gewählt aus der Gruppe bestehend aus Titandioxid (TiO₂), Eisenoxiden; und
Kombinationen davon.

3. Die Polymerzusammensetzung gemäß Anspruch 2, **dadurch gekennzeichnet, dass** sie, basierend auf dem Gesamtgewicht der Zusammensetzung, Folgendes umfasst:
- 10 bis 80 Gewichtsprozent, vorzugsweise 18 bis 25 Gewichtsprozent, des Trockenharzes;
- 5 bis 20 Gewichtsprozent, vorzugsweise 7 bis 10 Gewichtsprozent, des Acrylat- oder Methacrylatmonomers;
- 0,1 bis 1,5 Gewichtsprozent, vorzugsweise 0,1 bis 0,5 Gewichtsprozent, des Polymerisationsbeschleunigers vom Amintyp;
- 3 bis 50 Gewichtsprozent Talk und
- die einen oder mehreren Zusatzstoffe in ausreichender Menge auf 100 Gewichtsprozent.

4. Die Polymerzusammensetzung gemäß einem beliebigen der Ansprüche 1 bis 3, **dadurch gekennzeichnet, dass** das Harz ein ungesättigtes Polyesterharz ist, gewählt aus der Gruppe bestehend aus einem DCPD- (Dicyclopentadien-) basierten ungesättigten Polyesterharz, einem ungesättigten Tetrahydrophthalsäure-Polyesterharz, einem ungesättigten Orthophthalsäure-Polyesterharz und einem ungesättigten Vinylesterharz, vorzugsweise einem DCPD-basierten ungesättigten Polyesterharz.

5. Die Polymerzusammensetzung gemäß einem beliebigen der obigen Ansprüche, **dadurch gekennzeichnet, dass** das Acrylat- oder Methacrylatmonomer ein Acrylatmonomer ist, gewählt aus der Gruppe bestehend aus Isobutylacrylat, Butylacrylat und einer Kombination davon.

6. Die Polymerzusammensetzung gemäß einem beliebigen der Ansprüche 2 bis 5, **dadurch gekennzeichnet, dass** der Polymerisationsbeschleuniger vom Amintyp gewählt ist aus der Gruppe bestehend aus p-Toluidin, m-Toluidin und Derivaten davon.

7. Die Polymerzusammensetzung gemäß einem beliebigen der Ansprüche 2 bis 6, **dadurch gekennzeichnet, dass** sie 0,01-1 Gewichtsprozent des Oberflächenadditivs, basierend auf dem Gesamtgewicht der Zusammensetzung, umfasst.

8. Die Polymerzusammensetzung gemäß einem beliebigen der Ansprüche 2 bis 7, **dadurch gekennzeichnet, dass** das Oberflächenadditiv ein Wachs ist.

9. Die Polymerzusammensetzung gemäß einem beliebigen der Ansprüche 2 bis 8, **dadurch gekennzeichnet, dass** sie 0,008-0,020 Gewichtsprozent des Antioxidans, basierend auf dem Gesamtgewicht der Zusammensetzung, umfasst.

10. Die Polymerzusammensetzung gemäß einem beliebigen der Ansprüche 2 bis 9, **dadurch gekennzeichnet, dass** das Antioxidans gewählt ist aus der Gruppe bestehend aus 1,4-Naphthochinon, Toluenhydrochinon, Tetrahydrochinon, Parabenzochinon und einer Kombination davon, vorzugsweise einer Kombination aus 1,4-Naphthochinon, Toluenhydrochinon und Parabenzochinon.

11. Die Polymerzusammensetzung gemäß einem beliebigen der Ansprüche 2 bis 10, **dadurch gekennzeichnet, dass** sie bis zu 6 Gewichtsprozent des Rheologie-Modifizierers, basierend auf dem Gesamtgewicht der Zusammensetzung, umfasst.

12. Die Polymerzusammensetzung gemäß einem beliebigen der Ansprüche 2 bis 11, **dadurch gekennzeichnet, dass** der Rheologie-Modifizierer gewählt ist aus der Gruppe bestehend aus einem Rizinusölderivat, einem Silikagel mit einer Oberfläche von 200 m²/g und einer Kombination davon.

13. Die Polymerzusammensetzung gemäß einem beliebigen der Ansprüche 2 bis 12, **dadurch gekennzeichnet, dass** sie, basierend auf dem Gesamtgewicht der Zusammensetzung, eines oder mehrere von bis zu 25 Gewichtsprozent Bariumsulfat, bis zu 40 Gewichtsprozent Kalziumcarbonat und bis zu 10 Gewichtsprozent Kaolin umfasst.

14. Die Polymerzusammensetzung gemäß Anspruch 2, **dadurch gekennzeichnet, dass** sie, basierend auf dem Gesamtgewicht der Zusammensetzung, Folgendes umfasst:
- 10 bis 80 Gewichtsprozent eines DCPD-basierten ungesättigten Polyesterharzes,
- 5 bis 20 Gewichtsprozent eines Acrylatmonomers, gewählt aus der Gruppe bestehend aus Isobutylacrylat, Butylacrylat und einer Kombination davon,
- 0,1 bis 0,8 Gewichtsprozent N,N-bis(2-Hydroxyethyl)-p-toluidin,
- wahlweise bis zu 30 Gewichtsprozent TiO₂,
- 0,2 bis 8 Gewichtsprozent Eisenoxidgelb,
- 3 bis 50 Gewichtsprozent Talk,
- 0,001 bis 0,01 Gewichtsprozent 1,4-Naphthochinon,
- 0,003 bis 0,008 Gewichtsprozent Toluenhydrochinon,
- 0,004 bis 0,007 Gewichtsprozent Parabenzochinon,
- 0,01 bis 1 Gewichtsprozent eines Wachses,
- wahlweise bis zu 25 Gewichtsprozent Bariumsulfat,
- wahlweise bis zu 40 Gewichtsprozent Kalziumcarbonat,
- wahlweise bis zu 10 Gewichtsprozent Kaolin und
- wahlweise bis zu 6 Gewichtsprozent eines Rizinusölderivats.

15. Verwendung einer Zusammensetzung gemäß einem beliebigen der Ansprüche 1 bis 14 zur Fahrzeugreparatur; zum Verbinden und Reparieren von Marmor, Granit, Keramik, natürlichen und synthetischen Steinen; zum Modellieren; zum Herstellen von Formen und Modellen und für strukturelle Verbindungen von Verbundmaterial.

## Revendications

1. Composition polymère exempte de styrène et exempte de cobalt, **caractérisée en ce qu'**elle comporte :
- une résine choisie parmi le groupe constitué d'une résine de polyester non saturé, d'une résine à base d'uréthane acrylate et de combinaisons de celles-ci,
- un monomère d'acrylate ou de méthacrylate choisi parmi le groupe constitué de méthyl(méth)acrylate, d'éthyl(méth)acrylate, de butyl(méth)acrylate, d'isobutyl(méth)acrylate, d'hydroxyéthyl(méth)acrylate, de propyl(méth)acrylate, d'hydroxypropyl(méth)acrylate, de benzyl(méth)acrylate, de tripropylène glycol di(méth)acrylate, de 1,6-hexanediol(méth)acrylate, de dipropylène glycol di(méth)acrylate, de pentaérythritol tétracrylate (PPTTA), de triméthylol propane éthoxy triacrylate (TMPEOTA), de glycéryl triacrylate propoxylate (GPTA), d'isobornyl(méth)acrylate, de phénoxyéthyl(méth)acrylate, d'hexyl(méth)acrylate, de cyclohexyl(méth)acrylate, de 2-butoxyéthyl(méth)acrylate, d'éthyl hexyl(méth)acrylate, d'isodécyl(méth)acrylate, de 1,3-butanediol di(méth)acrylate,
- un accélérateur de polymérisation de type amine, et
- du talc.

2. Composition polymère selon la revendication 1, **caractérisée en ce qu'**elle comporte en outre un ou plusieurs additifs choisis parmi le groupe constitué de :
(a) un antioxydant,
(b) un additif de surface,
(c) une charge minérale constituée d'un ou plusieurs éléments parmi du sulfate de baryum, du carbonate de calcium ou du kaolin,
(d) un modificateur de rhéologie,
(e) un pigment choisi parmi le groupe constitué du dioxyde de titane (TiO₂), d'oxydes de fer, et
de combinaisons de ceux-ci.

3. Composition polymère selon la revendication 2, **caractérisée en ce qu'**elle comporte, sur la base du poids total de la composition :
- 10 à 80 % en poids, de préférence 18 à 25 % en poids, de la résine sèche,
- 5 à 20 % en poids, de préférence 7 à 10 % en poids, du monomère d'acrylate ou de méthacrylate,
- 0,1 à 1,5 % en poids, de préférence 0,1 à 0,5 % en poids, de l'accélérateur de polymérisation de type amine,
- 3 à 50 % en poids de talc, et
- l'additif ou les additifs en quantité suffisante jusqu'à 100 % en poids.

4. Composition polymère selon l'une quelconque des revendications 1 à 3, **caractérisée en ce que** ladite résine est une résine de polyester non saturé choisie parmi le groupe constitué d'une résine de polyester non saturé à base de DCPD (dicyclopentadiène), d'une résine de polyester non saturé tétrahydrophthalique, d'une résine de polyester non saturé orthophthalique et d'une résine d'ester vinylique non saturé, de préférence une résine de polyester non saturé à base de DCPD.

5. Composition polymère selon l'une quelconque des revendications précédentes, **caractérisée en ce que** ledit monomère d'acrylate ou de méthacrylate est un monomère d'acrylate choisi parmi le groupe constitué d'isobutylacrylate, de butylacrylate et d'une combinaison de ceux-ci.

6. Composition polymère selon l'une quelconque des revendications 2 à 5, **caractérisée en ce que** ledit accélérateur de polymérisation de type amine est choisi parmi le groupe constitué de p-toluidine, de m-toluidine et de dérivés de celles-ci.

7. Composition polymère selon l'une quelconque des revendications 2 à 6, **caractérisée en ce qu'**elle comporte 0,01 à 1 % en poids de l'additif de surface sur la base du poids total de la composition.

8. Composition polymère selon l'une quelconque des revendications 2 à 7, **caractérisée en ce que** ledit additif de surface est une cire.

9. Composition polymère selon l'une quelconque des revendications 2 à 8, **caractérisée en ce qu'**elle comporte 0,008 à 0,020 % en poids de l'antioxydant, sur la base du poids total de la composition.

10. Composition polymère selon l'une quelconque des revendications 2 à 9, **caractérisée en ce que** ledit antioxydant est choisi parmi le groupe constitué de 1,4-naphthoquinone, de toluène hydroquinone, de tétrahydroquinone, de parabenzoquinone et d'une combinaison de celles-ci, de préférence une combinaison de 1,4-naphthoquinone, de toluène hydroquinone et de parabenzoquinone.

11. Composition polymère selon l'une quelconque des revendications 2 à 10, **caractérisée en ce qu'**elle comporte jusqu'à 6 % en poids du modificateur de rhéologie, sur la base du poids total de la composition.

12. Composition polymère selon l'une quelconque des revendications 2 à 11, **caractérisée en ce que** ledit modificateur de rhéologie est choisi parmi le groupe constitué d'un dérivé d'huile de ricin, d'un gel de silice avec une aire de surface de 200 m²/g et d'une combinaison de ceux-ci.

13. Composition polymère selon l'une quelconque des revendications 2 à 12, **caractérisée en ce qu'**elle comporte, sur la base du poids total de la composition, un ou plusieurs éléments parmi du sulfate de baryum jusqu'à 25 % en poids, du carbonate de calcium jusqu'à 40 % en poids, et du kaolin jusqu'à 10 % en poids.

14. Composition polymère selon la revendication 2, **caractérisée en ce qu'**elle comporte, sur la base du poids total de la composition :
- 10 à 80 % en poids d'une résine de polyester non saturé à base de DCPD,
- 5 à 20 % en poids d'un monomère d'acrylate choisi parmi le groupe constitué d'isobutylacrylate, de butylacrylate et d'une combinaison de ceux-ci,
- 0,1 à 0,8 % en poids de N,N-bis(2-hydroxyéthyl)-p-toluidine,
- facultativement jusqu'à 30 % en poids de TiO₂,
- 0,2 à 8 % en poids d'oxyde de fer jaune,
- 3 à 50 % en poids de talc,
- 0,001 à 0.01 % en poids de 1,4-naphthoquinone,
- 0,003 à 0,008 % en poids de toluène hydroquinone,
- 0,004 à 0,007 % en poids de parabenzoquinone,
- 0,01 à 1 % en poids d'une cire,
- facultativement jusqu'à 25 % en poids de sulfate de baryum,
- facultativement jusqu'à 40 % en poids de carbonate de calcium,
- facultativement jusqu'à 10 % en poids de kaolin, et
- facultativement jusqu'à 6 % en poids d'un dérivé d'huile de ricin.

15. Utilisation d'une composition selon l'une quelconque des revendications 1 à 14 pour la réparation automobile, le collage et la réparation de marbre, de granit, de céramique, de pierres naturelles et synthétiques, le modelage, la fabrication de moules et de modèles, et les assemblages structurels de matériau composite.
